Europäisches Patentamt

European Patent Office

Office européen des brevets

(11) Veröffentlichungsnummer: **0 498 032 A2**

## (12) EUROPÄISCHE PATENTANMELDUNG

(21) Anmeldenummer: **91115411.0**

(51) Int. Cl.5: **A23K 1/20**

(22) Anmeldetag: **12.09.91**

(30) Priorität: **02.02.91 DE 4103195**
**02.02.91 DE 9101202 U**

(43) Veröffentlichungstag der Anmeldung:
**12.08.92 Patentblatt 92/33**

(84) Benannte Vertragsstaaten:
**AT BE CH DE DK ES FR GB GR IT LI LU NL**

(71) Anmelder: **Schaumann, Wilhelm H.**
**An der Mühlenau 4**
**W-2080 Pinneberg(DE)**

(72) Erfinder: **Schinkel, Otto, Dipl.-Ing. (FH)**
**Schulstrasse 5**
**W-2200 Klein-Nordende(DE)**
Erfinder: **Callsen, Hans, Dipl.-Ing. (FH)**
**Am Bormbrook 2**
**W-2407 Bad Schwartau(DE)**

(74) Vertreter: **Dipl.-Ing. H. Hauck Dipl.-Ing. E.**
**Graalfs Dipl.-Ing. W. Wehnert Dr.-Ing. W.**
**Döring**
**Neuer Wall 41**
**W-2000 Hamburg 36(DE)**

(54) **Verfahren zum Herstellen von stückigem Mineralfutter oder Ergänzungsfuttermittel.**

(57) Verfahren zum Herstellen von stückigem Mineralfutter/Ergänzungsfuttermittel durch Erzeugen eines homogenen Gemischs verschiedener Mineralfutter-/Ergänzungsfuttermittelkomponenten in Pulverform und Pressen des pulverförmigen Gemischs zu stückigem Mineralfutter/Ergänzungsfuttermittel, gekennzeichnet durch die Verwendung einer Walzenpresse mit zwei sich gegensinnig drehenden Walzen und einem dazwischen ausgebildeten Walzenspalt zum Pressen des pulverförmigen Gemischs zu stückigem Mineralfutter/Ergänzungsfuttermittel.

EP 0 498 032 A2

Gegenstand der Erfindung ist ein Verfahren zum Herstellen von stückigem Mineralfutter oder Ergänzungsfuttermittel durch Erzeugen eines homogenen Gemischs verschiedener Mineralfutter-/Ergänzungsfuttermittelkomponenten in Pulverform und Pressen des pulverförmigen Gemischs zu stückigem Mineralfutter/Ergänzungsmittel.

Mineralfutter können aus einer Vielzahl von Komponenten bestehen und enthalten in der Regel Mineralien, Vitamine, Wirkstoffe und Spurenelemente. Ergänzungsfuttermittel enthalten zusätzlich mindestens eine organische Komponente. Sie können zum einen direkt verfüttert werden, wofür sie in Pulverform, pelletiert oder granuliert bereitgestellt werden. Zum anderen können sie in Pulverform ein Halbfabrikat sein, welches in Mischung mit Getreide und eiweißhaltigen Komponenten wie Sojaschrot verfüttert wird. In einem derartigen Futtergemisch haben sie einen Anteil von ca. 2 bis 5 Gew.-%. Diese pulverförmigen Produkte sind jedoch auch bei Flüssigkeitszusätzen nicht staubfrei und in der Handhabung problematisch.Manche Futterkomponenten können bei Freisetzung Umwelt und Gesundheit erheblich beeinträchtigen. Außerdem neigt das Pulvergemisch aufgrund sehr verschiedener spezifischer Gewichte der Komponenten zur Entmischung, was eine bevorzugte Freisetzung in hoher Konzentration gefährlicher Stoffe sowie eine Über- bzw. Unterversorgung des aufnehmenden Tiers mit bestimmten Komponenten zur Folge haben kann.

Ferner gibt es schon stückiges Mineralfutter oder Ergänzungsfuttermittel in Form von Pellets, Granulaten oder Tabletten, die ohne Zusätze direkt an das Tier verfüttert werden können. Ein derartiges staubfreies Fertigprodukt hat (Sicherheits-)Vorteile in der Handhabung und setzt die Belastungen von Umwelt und Gesundheit erheblich herab. Außerdem kommt es praktisch nicht zu Entmischungserscheinungen, weil die Futterkomponenten in den einzelnen Mineralfutter-/Ergänzungsfuttermittelstücken in dem bei der Herstellung homogenisierten Mischungsverhältnis eingebunden bleiben. Bei herkömmlichen Verfahren der eingangs genannten Art zum Herstellen von Mineralfutter/Ergänzungsfuttermittelstücken wird das pulverförmige Gemisch u.a. in einer Pelletieranlage verpreßt, die im wesentlichen eine flache oder ringförmige Matrize mit einem darüberlaufenden Koller aufweist. Das Pulver wird vom Koller durch Löcher der Matrize gepreßt, aus denen es in Zylinderform austritt. Bei jedem Lauf des Kollers über eine Öffnung wird der austretende Zylinder um ein angepreßtes Schichtstück verlängert. Beim Pressen benötigt man mehr Flüssigkeit, um die Reibung zu reduzieren. Dies ist in der Regel mit einer Erhöhung des Wassergehaltes verbunden, wodurch die Reaktionsfreudigkeit des Produkts steigt. Diese Methode ist jedoch sehr energieaufwendig, zumal sie eine erhebliche Temperaturerhöhung des Mineralfutters/Ergänzungsfuttermittels bedingt, die zudem Futterkomponenten schädigen kann, insbesondere weil sie die Reaktionsfreudigkeit erhöht. Außerdem treten beim Pressen im Gemisch sehr hohe Drücke, Scher- und Reibungskräfte auf, welche von den Futterkomponenten insbesondere die Vitamine chemisch entwerten und schädigen. Letztere sind nämlich zum Schutz vor unerwünschter Oxidation und Reaktion mit anderen Futterkomponenten mit einem Schutzmantel z.B. aus Gelatine versehen, der unter den genannten Verfahrensbedingungen leicht zerstört werden kann. Unerwünschte Reaktionen laufen unter der hohen Partikeldichte infolge hoher Preßdrücke schnell ab und senken die Lagerfähigkeit des Erzeugnisses. Schließlich hat das herkömmliche Verfahren den Nachteil, daß es die Verwendung von Futterkomponenten einschränkt und nur innerhalb relativ enger Grenzen der Mischungszusammensetzung funktioniert. Dies ist insbesondere eine Folge der problematischen Fließverhältnisse in den Matrizen-Öffnungen.

Davon ausgehend liegt der Erfindung die Aufgabe zugrunde, ein verbessertes Verfahren der eingangs genannten Art zu schaffen, das unter Beibehaltung der günstigen Handhabungs-, Umwelt-, Gesundheits- und Mischungseigenschaften energetisch günstiger ist, die Futterkomponenten schonender behandelt sowie deren Verwendbarkeit und Mischungsbereich vergrößert und zu besser lagerfähigen Mineralfutter-/Ergänzungsfuttermittelstücken führt.

Zur Lösung dieser Aufgabe ist erfindungsgemäß bei dem eingangs genannten Verfahren die Verwendung einer Walzenpresse mit zwei sich gegensinnig drehenden Walzen und einem dazwischen ausgebildeten Walzenspalt zum Pressen des pulverförmigen Gemischs zu stückigem Mineralfutter oder Ergänzungsfuttermittel vorgesehen.

Nach der Erfindung wird also ein homogenes Gemisch verschiedener Mineralfutter- oder Ergänzungsfuttermittelkomponenten in Pulverform erzeugt, welches aufgrund des nachgeschalteten Verfahrensabschnitts eine größere Variabilität hinsichtlich der eingesetzten Komponenten und ihrer Konzentrationen aufweist. Das pulverförmige Gemisch wird danach in den Walzenspalt einer Walzenpresse gegeben, in dem es zwischen zwei sich gegensinnig drehenden Walzen zu Mineralfutter-/Ergänzungsfuttermittelpreßlingen kompaktiert wird. Dieses Pressen stückigen Mineralfutters/Ergänzungsfuttermittels ist energetisch erheblich günstiger als das herkömmliche Pelletieren, weil nur ungefähr 10 bis 15 kWh pro Tonne gegenüber etwa 40 bis 70 kWh pro Tonne an elektrischer Energie eingesetzt werden müssen. Deshalb ist auch eine geringere Produkterwärmung festzustellen. Darüber hinaus treten beim erfindungsgemäßen Pressen geringere Scher-, Reibungskräfte und Drücke auf, welche die wertbestimmenden Inhaltsstoffe, insbesondere Vitamine und andere Wirkstoffe, praktisch nicht mehr schädigen oder entwerten. Es resultieren Mineralfutter-/Ergänzungsfuttermittelstücke mit von der Oberfläche nach innen abnehmender Dichte, die außen beim Transport oder sonstigen Handhabungsvorgängen einer Zerstörung einen ausreichenden Widerstand entgegensetzen und innen hohe und unerwünschte chemische Reaktionen fördernde Partikelkonzentrationen vermeiden. Dies kommt auch der Lagerfähigkeit des Erzeugnisses zugute. Insgesamt wird somit ein Einspareffekt bei wichtigen Futterkomponenten, insbesondere Vitaminen, erreicht, die dem Gemisch nicht in einem Überschuß zugegeben werden müssen, um eine Schädigung während oder nach der Herstellung zu kompensieren. Außerdem sind Einsetzbarkeit und Einsatzbereiche der Futterkomponenten vergrößert, so daß das Mineralfutter/Ergänzungsfuttermittelbesser auf die Bedürfnisse von Tier und Aufzucht abgestimmt werden kann. Dabei sind die staubfreien Mineralfutterstücke/Ergänzungsfuttermittelstücke in der Handhabung unproblematisch und insbesondere aufgrund der sicheren Einbindung gesundheitsgefährdender Komponeneten umwelt- und gesundheitsverträglich. Schließlich ist auch bei dem erfindungsgemäß hergestellten Mineralfutter/Ergänzungsfuttermittel praktisch keine Entmischung festzustellen, weil die Mischgüte des Gemischs durch das Pressen nicht verschlechtert wird und im Preßling erhalten bleibt. Erfindungsgemäß kann somit besonders sicher der Gehalt der Mineralfutterstücke/Ergänzungsfuttermittelstücke an Komponenten angegeben und garantiert werden.

Die Verwendung von Walzenpressen zum Kompaktieren und Brikettieren pulverförmiger Materialien ist zwar insbesondere in der Grundstoffindustrie wie dem Bergbau oder dem Eisenhüttenwesen schon bekanntgeworden. Die stabilisierende Funktion dieses Verfahrens für die Erhaltung der Mischgüte eines pulverförmigen Gemisches insbesondere aus Mineralfutter-/Ergänzungsfuttermittelkomponenten ist jedoch bislang weder aufgezeigt noch genutzt worden. Auch das scherkraftarme Pressen des Ausgangsstoffes unter relativ geringen Drücken hat man bislang noch nicht gezielt für das Kompaktieren insoweit empfindlicher Materialien wie Gemischen aus Mineralfutter-/Ergänzungsfuttermittelkomponenten, insbesondere mit Vitaminzusätzen, verwendet.

Die Verarbeitung des pulverförmigen Gemisches ohne Entmischungserscheinungen wird weiter verbessert, wenn gemäß einer Ausgestaltung des Verfahrens die Korngrößen der verschiedenen Mineralfutter-/Ergänzungsfuttermittelkomponenten vor oder nach Her-stellen des Gemisches vergleichmäßigt werden.

Gemäß einer praktischen Weiterbildung wird eine Walzenpresse mit Profilierungen vorzugsweise in Umfangsrichtung zum Pressen profilierten, stückigen Mineralfutters/Ergänzungsfuttermittels verwendet. Die Profilierungen können sowohl eine Aufteilung des Mineralfutters/Ergänzungsfuttermittels in Platten- oder Riegelform, als auch eine Stabilisierung einzelner Mineralfutter-/Ergänzungsfuttermittelstücke an der Oberfläche bewirken.

Erfindungsgemäß können Walzenpressen mit glatten Walzen verwendet werden, wobei Mineralfutter-/Ergänzungsfuttermittelstücke in Form (gebrochener) Platten resultieren. Zwecks Verbesserung insbe-sondere der Dosierbarkeit und der Aufnahme durch das Tier kann gemäß einer weiteren Ausgestaltung eine Walzenpresse mit Formwalzen zum Einsatz kommen, die ein stückiges Mineralfutter/Ergänzungsfuttermittel liefern.

Praktisch bevorzugt wird eine Walzenpresse mit Formmulden zum Pressen brikettförmigen Mineralfutters/Ergänzungsfuttermittels verwendet. Briketts, z.B. in Form von Kissen, Mandeln oder Tropfen, haben besonders günstige Handhabungseigenschaften, insbesondere Dosierbarkeit, und sind gut verfütterbar.

Ferner sieht eine Ausgestaltung der Erfindung vor, daß eine Schnecke zur Vorverdichtung des pulverförmigen Gemisches vor der Walzenpresse verwendet wird. Diese Materialzufuhr durch Vorverdichterschnecken ermöglicht eine hohe Ausbringung auch mittels einer relativ klein dimensionierten Walzenpresse. Außerdem verhindert sie Lufteinschlüsse und bewirkt eine gleichmäßige Materialzufuhr in den Walzenspalt.

Gemäß einer Weiterbildung des Verfahrens kann das stückige Mineralfutter-/Ergänzungsfuttermittel nach dem Pressen zerkleinert und ggf. gesiebt werden. Vorzugsweise plattenförmiges Mineralfutter-/Ergänzungsfuttermittel kann auf diese Weise zu einem feinen Granulat verarbeitet werden, wobei die Zerkleinerung in einem Walzenstuhl erfolgen kann. Ggf. erfolgt danach eine Siebung, so daß ein sehr gleichmäßiges Korn z.B. in einem Bereich von 2 bis 5 mm zur Verfügung gestellt werden kann. Das Überkorn aus der Siebung kann erneut der Zerkleinerung und die mehlartigen Feinbestandteile können erneut der Walzenpresse zugeführt werden. Auf diese Weise wird mit insgesamt relativ geringem Energieaufwand ein feines Granulat zur Verfügung gestellt.

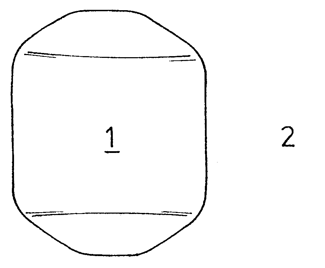

Die beiliegende Zeichnung zeigt einen Preßling 1 in Brikettform in der Draufsicht. Nahe seiner Oberflächen 2 hat der Preßling 1 seine höchste Teilchendichte, so daß er bei der Handhabung eine gute Formbeständigkeit aufweist. Zum Zentrum des Preßlings hin nimmt jedoch seine Dichte ab. Diese Dichteverteilung ist Folge der Herstellung des Preßlinges 1 mittels einer Walzenpresse.

**Patentansprüche**

1.  Verfahren zum Herstellen von stückigem Mineralfutter/Ergänzungsfuttermittel durch Erzeugen eines homogenen Gemischs verschiedener Mineralfutter-/Ergänzungsfuttermittelkomponenten in Pulverform und Pressen des pulverförmigen Gemischs zu stückigem Mineralfutter/Ergänzungsfuttermittel, gekennzeichnet durch die Verwendung einer Walzenpresse mit zwei sich gegensinnig drehenden Walzen und einem dazwischen ausgebildeten Walzenspalt zum Pressen des pulverförmigen Gemischs zu stückigem Mineralfutter/Ergänzungsfuttermittel.

2.  Verfahren nach Anspruch 1, dadurch gekennzeichnet, daß die Korngrößen der verschiedenen Mineralfutter/Ergänzungsfuttermittelkomponenten vor oder nach Herstellen des Gemischs vergleichmäßigt werden.

3.  Verfahren nach Anspruch 1 oder 2, dadurch gekennzeichnet, daß eine Walzenpresse mit Profilierungen vorzugsweise in Umfangsrichtung zum Pressen profilierten, stückigen Mineralfutters/Ergänzungsfuttermittels verwendet wird.

4.  Verfahren nach einem der Anspruch 1 oder 2, dadurch gekennzeichnet, daß eine Walzenpresse mit Formwalzen verwendet wird.

5.  Verfahren nach Anspruch 4, dadurch gekennzeichnet, daß eine Walzenprese mit Formmulden zum Pressen brikettförmigen Mineralfutters/Ergänzungsfuttermittels verwemdet wird.

6.  Verfahren nach einem der Ansprüche 1 bis 5, dadurch gekennzeichnet, daß eine Schnecke zur Vorverdichtung des pulverförmigen Gemischs vor der Walzenpresse verwendet wird.

7.  Verfahren nach einem der Ansprüche 1 bis 6, dadurch gekennzeichnet, daß das stückige Mineralfutter-/Ergänzungsfuttermittel nach dem Pressen zerkleinert und ggf. gesiebt wird.